# EUROPEAN PATENT SPECIFICATION

(11) **EP 0 398 674 B1**
(45) Date of publication and mention of the grant of the patent: **20.03.1996**
(21) Application number: 90305261.1
(22) Date of filing: 16.05.1990
(51) Int. Cl.: C21C 1/02

(54) **Desulphurisation agent**
Entschwefelungsmittel
Agent désulfurant

(30) Priority: 18.05.1989 US 353700; 14.03.1990 US 493301
(43) Date of publication of application: 22.11.1990
(73) Proprietor: Elkem Metals Company, Pittsburgh Pennsylvania 15230 (US)
(72) Inventor: McCluhan, Thomas K., North Tonawanda, NY 14120 (US); Craig, Donald B., Grand Island, NY 14072 (US); Kaiser, Robert H., Youngstown, NY 14174 (US)
(74) Representative: Rees, David Christopher

(56) References cited:
- EP-A- 0 170 407
- EP-A- 0 279 894
- DE-A- 2 907 069
- DE-A- 3 535 280
- DE-A- 3 544 563
- DE-C- 2 037 758
- FR-A- 2 432 550
- PATENT ABSTRACTS OF JAPAN vol. 3, no. 11 (P-75)(C35), 30 January 1979; & JP-A-53-134718 (DENKI KAGAKU KOGYO) 24.11.1978
- PATENT ABSTRACTS OF JAPAN vol. 3, no. 75 (C-50), 27 June 1979; & JP-A-5450419 (DENKI KAGAKU KOGYO) 20.04.1979
- Translation into English of JP-A-49531/77 Hütte, Taschenbuch für Eisenhüttenleute, 1961, pages 154-155

## Description

The present invention relates to a desulphurisation agent for molten iron and a method for reducing the residual calcium carbide in slag, produced during desulphurisation of molten iron.

Conventionally, desulphurisation of iron, in many respects, is significantly different from desulphurisation of steel. For instance, the slag phase in a steel desulphurisation process is typically a liquid while the slag from an iron desulphurisation process is typically a solid.

Conventionally, desulphurisation of iron is conducted subsequent to a cupola or some other melting unit by the addition of a desulphurisation agent to a melt of molten iron in a ladle. In the case of ductile iron, granulated commercial calcium carbide is the standard desulphurisation agent. Generally, commercial calcium carbide is added to a stream of molten iron as it enters a ladle equipped with a porous plug. The porous plug is used to produce a stream of bubbles of an inert gas such as argon or nitrogen through the molten iron in order to obtain good mixing between the calcium carbide and liquid iron. Other mechanical and pneumatic mixing devices are also employed on occasion.

Commercial calcium carbide, also referred to as technical, industrial or foundry grade, comprises about 70 to about 85% by weight of calcium carbide, CaC₂, and about 15 to about 25% by weight of a mixture of calcium oxide, CaO, and calcium hydroxide Ca(OH)₂; the remaining about 5% are miscellaneous ingredients.

For desulphurising iron, calcium carbide in combination with other compounds has been suggested in the art. Specifically, US-A-4,260,413 teaches coating calcium carbide with carbon as a lubricant to increase storage life and improve the flowability of calcium carbide.

US-A-4,572,737 teaches coating calcium carbide with a compound having a contact angle with the molten iron that is less than the contact angle of calcium carbide with the molten iron. The suggested compounds used to coat the calcium carbide are titanium oxide, ferric oxide (Fe₂O₃), calcium aluminate (3CaO.Al₂O₃), calcium hydroxide (Ca(OH)₂), fluorspar (CaF₂), iron powder, fumed titania, and fumed silica. A binding agent can be used to adhere the coating compound to the calcium carbide.

US-A-4,753,676 teaches a process for desulphurising iron melts using a mixture of commercial calcium carbide and diamide lime. The '676 patent also alleges that commercial calcium carbide used in combination with diamide lime reduces the amount of residual calcium carbide in slag.

US-A-4,764,211 teaches using a mixture of industrial calcium carbide and dried coal which contains at least 15% by weight of volatile constituents. Magnesium, aluminium oxide, aluminium, and fluorspar may also be included in the desulphurisation agent of the '211 patent.

JP-A-5450419 is concerned with calcium carbide having a low melting point. This is produced by adding a CaO.F₂O₃, CaO.Sio₂, CaO.Al₂O₃ and CaO.B₂O₃ to molten CaC₂. The resulting product is a eutectic composition.

The exact chemical interaction between calcium carbide and sulphur to effect desulphurisation of the iron melt is not exactly known. It is thought that the calcium carbide dissociates into calcium, which reacts with the sulphur dissolved in the iron to form calcium sulphide (CaS), and carbon, which is a by-product of this reaction. It is also thought that the calcium sulphide forms a layer on the surface of the calcium carbide particle which tends to hinder further reaction between the calcium carbide and sulphur. Calcium carbide/calcium sulphide, calcium carbide and calcium sulphide are thought to be solids in the iron melt, and, due to their low relative densities, they tend to rise to the top of the melt. At the top of the melt these solid materials form a portion of a slag phase that is subsequently removed from the top of the melt. Typically, in the desulphurisation process of iron with commercial calcium carbide, the calcium carbide is not entirely consumed and the slag removed from the melt contains residual calcium carbide. Disposal of this slag can create a potential problem because the residual calcium carbide in the slag can be converted to acetylene when it comes into contact with water, e.g. humidity, rain, melting snow.

Acetylene generated from commercial calcium carbide is a gas at normal temperature and pressure and can be toxic when inhaled. At normal pressure and temperature it is flammable and burns with a sooty flame. At 2 atmospheres or more, it can become explosive by decomposition or ignition by a spark. because of acetylene's explosive capability, it is generally handled cautiously.

Slag from the desulphurisation process of molten iron has recently come under scrutiny because of its residual calcium carbide content. If the amount of residual calcium carbide in the slag is too high, the slag may be classified as a hazardous waste. Foundries, in general, have realised the need to reduce the amount of residual calcium carbide in slag.

It is an object of the present invention to minimise the amount of residual calcium carbide in the slag from the desulphurisation of iron.

According to the invention, there is provided a desulphurisation agent for an iron melt including commerical calcium carbide, characterised in that it also includes a flux agent comprising silicon dioxide and/or calcium aluminate slag, in a uniform physical mixture with the calcium carbide.

The desulphurisation agent of the present invention minimises the amount of residual calcium carbide in the slag.

The desulphurisation agent employed in the present invention comprises a uniform mix of preferably commercial calcium carbide and a flux agent. The flux agent is one or more agents selected from the group consisting of silicon dioxide and calcium aluminate slag. The calcium aluminate slag may comprise a uniform mixture of calcium oxide, aluminium oxide, and calcium fluoride. Preferably, a metal oxide such as an iron oxide or a manganese oxide is included in the formulation of the desulphurising agent of the present invention. When silicon dioxide is used as the flux agent, it is preferred that calcium fluoride (CaF₂) is added to the uniform mix of calcium carbide and silicon dioxide alone or in combination with the metal oxide. The preferred metal oxides are ferric oxide (Fe₂O₃), ferrosoferric oxide (Fe₃O₄), manganic oxide (Mn₂O₃) and manganomanganic oxide (Mn₃O₄).

It has been found that by employing the desulphurising agent of the present invention, a slag low in residual calcium carbide is produced.

It was both surprising and unexpected that the combination of calcium carbide and a calcium aluminate slag comprising calcium oxide, aluminium oxide and calcium fluoride lowered the amount of residual calcium carbide in the slag. It was also surprising that this combination worked as a desulphurisation agent because calcium aluminate slag comprising calcium oxide, calcium fluoride and aluminium oxide, although known to aid in the desulphurisation of steel melts, is not known to aid in the desulphurisation or iron melts. It was also surprising and unexpected that the addition of a metal oxide helped to desulphurise the iron melts because it has generally been thought that iron oxides, and especially manganomanganic oxide, actually hinder the desulphurisation of iron melts.

It was also both surprising and expected that the combination of calcium carbide and silicon dioxide lowered the amount of residual calcium carbide in the slag. Additionally, it was surprising that this combination worked as a desulphurisation agent because silicon dioxide is known to have a deleterious effect on the desulphurisation of steel.

It has also been found that by employing the desulphurisation agent of the present invention the amount of commercial calcium carbide needed to reduce the sulphur content of the iron to a desired level is less than the amount needed using commercial calcium carbide alone.

Thus, a method has been discovered for reducing the residual calcium carbide in slag obtaining from a conventional process of desulphurising an iron melt with commercial calcium carbide. The method comprises forming a uniform physical mixture of particulate commercial calcium carbide and a flux agent comprising calcium aluminate slag and or silicon dioxide; desulphurising the iron melt with the mixture; and recovering a slag low in calcium carbide.

The invention therefore extends to a method for making a desulphurisation agent for an iron melt comprising the steps of: forming a physical mixture of particulate commercial calcium carbide and particulate silicon dioxide; compacting the mixture; and granulating the compacted mixture to form a particulate uniform physical mixture of commercial calcium carbide and silicon dioxide.

Preferably, the step of forming the uniform mixture of commercial calcium carbide and flux agent includes the step of adding a metal oxide comprising an iron oxide or a manganese oxide to the mixture. Additionally, it is preferred that in forming the uniform mix of calcium carbide and silicon dioxide, calcium fluoride is added alone or in combination with the metal oxide to the mix.

In accordance with the invention, an alternative method for making a desulphurisation agent for molten iron comprising the steps of: forming a molten composition of a calcium oxide, a calcium fluoride and an aluminium oxide; rapidly cooling the molten composition to a solid composition; and combining the solid composition with a commercial calcium carbide to form a physical mixture constituting the desulphurising agent.

The amount of flux agent employed in the desulphurisation agent of the present invention is about 5 to about 30% by weight; and more preferably about 10 to about 20% by weight. Even more preferred is to use about 12 to about 18% by weight flux agent in the uniform mix.

The amount of metal oxide present in the desulphurisation agent of the present invention is preferably about 0.5 to about 10% by weight and more preferred is about 2 to 8% by weight. Better results are obtaining using about 3 to about 6% by weight metal oxide in the mix.

When using silicon dioxide as the flux agent, the amount of calcium fluoride in the mix of the present invention is preferably about 0.1 to about 5% by weight, and more preferably about 0.5 to about 3% by weight. Better results are obtained using about 1 to about 2% by weight calcium fluoride in the mix of the present invention.

Preferably, the calcium aluminate slag comprises about 50 to about 65% by weight calcium oxide, about 25 to about 35% by weight aluminium oxide, and about 3 to about 12% by weight calcium fluoride. More preferably, the calcium aluminate slag comprises about 52 to about 58% by weight calcium oxide, about 25 to about 32% by weight aluminium oxide, and calcium fluoride in the proportions as stated above. One of skill in the art will realise that, in making the calcium aluminate slag, tramp elements will be present in the calcium aluminate slag. Preferably, the amount of tramp elements is below about 10% by weight of calcium aluminate slag. Typically, the tramps include silicon dioxide, iron oxide and titanium dioxide. Silicon dioxide is typically present in an amount less than about 5% by weight, iron oxide less than about 3% by weight, and titanium dioxide less than about 2% by weight.

The amount of commercial calcium carbide in the desulphurisation agent of the present invention is the remainder of the desulphurisation agent after the addition of the other components. Preferably the desulphurisation agent contains about 60 to about 95% by weight, more preferably about 70 to about 90%. Even more preferred is about 75 to about 85% by weight commercial calcium carbide in the mix.

Preferably, the desulphurising agent of the present invention employing silicon dioxide as a flux agent consists essentially of about 60 to about 95% by weight of commercial calcium carbides, about 5 to about 25% by weight of silicon dioxides, up to about 10% by weight of a metal oxide selected from the group consisting of an iron oxide and a manganese oxide, and up to 5% by weight calcium fluoride.

Preferably, the desulphurising agent of the present invention employing calcium aluminate slag as a flux agent consists essentially of about 70 to about 95% by weight of commercial calcium carbide, about 5 to about 30% by weight of a calcium aluminate slag, and about 0 to about 10% by weight of the metal oxide, the calcium aluminate slag comprising about 50 to about 65% by weight calcium oxide, about 25 to about 35% by weight calcium fluoride.

Good results have been obtained with the desulphurisation agent of the present invention consisting essentially of the components listed above in their stated proportions.

The desulphurisation agent of the present invention is preferably used in a particulate form, preferably 12 mesh x 30 mesh (1.68 x 0.595mm). The particulate form can be made from a loose uniform mixture of ingredients or, more preferably, by compacting uniform loose mixture of ingredients and sizing the compacted product to the preferred size to form a uniform, compacted mixture. Compacting may be carried out in a conventional and convenient manner.

A suitable method for making the uniform compacted desulphurisation agent of the present invention is one in which weighed portions of the components on a continuous belt are subjected to a conventional roll compactor which forms a sheet of material. Next, the sheet is passed through a granulator. The granulated sheet is then sized with conventional screens. The oversize goes to a hammer mill, for example, while the undersize goes back to the belt. It is important that the components of the desulphurisation agent of the present invention are uniformly mixed together and held in close association with each other. The commercial calcium carbide helps to bind and hold all the components in close association with each other. A binder such as asphalt could also be used; however, such a binder is not preferred because of the smoke and soot evolved when the desulphurisation agent is added to the melt. Preferably, the calcium carbide binds the components together and holds them in close proximity to each other. During compaction, it has been found that the calcium carbide is forced to flow and will at least partially encompass the other components of the desulphurisation agent of the present invention. It is noted that the commercial calcium carbide is not coated with the other components of the desulphurisation agent.

The phrase "commercial calcium carbide" as used in the specification and claims means commercial or industrial grade calcium carbide. Commercial calcium carbide comprises about 70 to about 85% by weight pure calcium carbide, CaC₂, about 15 to about 25% by weight of a mixture of calcium oxide, CaO, and calcium hydroxide, Ca(OH)₂, and less than about 5% miscellaneous ingredients. Suitable commercial calcium carbide has a size of about 30 mesh (0.595mm) x D and more preferably 30 mesh by 150 mesh (0.595 x 0.105mm).

Suitable manganese oxides include manganous oxide (MnO), manganic oxide (Mn₂O₃), manganese dioxide (MnO₂) and manganomanganic oxide (Mn₃O₄). Preferably, manganic oxide or manganomanganic oxide is used. The manganese oxide preferably in particulate form and, preferably measures about 40 mesh (0.42mm) x D. Conventional sources of particulate manganomanganic oxide, Mn₃O₄, may be used in the present invention. Suitable sources of manganomanganic oxide include reagent grade and pigment grade. Another possible source of manganomanganic oxide is the fume from a ferromanganese refining vessel. Typically, the chemical analysis of a suitable pigment grade manganomanganic oxide is about 60 to about 70% manganese, about 1 to about 1% iron, about 1 to about 5% calcium oxide, and about 1 to about 5% magnesium oxide. Any suitable conventional source of particulate manganic oxide may be used in the present invention.

Suitable iron oxides include ferric oxide (Fe₂O₃), ferrosoferric oxide (Fe₃O₄) and ferrous oxide (FeO). Preferably, ferric oxide or ferrosoferric oxide is used. Any conventional source of particulate ferric oxide, Fe₂O₃, may be used in the present invention. Ferric oxide, also known as red iron oxide, nonmagnetic iron oxide, and red rouge, is typically about 100% Fe₂O₃. Suitable sources of ferric oxide include not only reagent grade and pigment grade, but also certain iron ores high in ferric oxide. Any conventional source of ferrosoferric oxide, Fe₃O₄, may be used. Ferrosoferric oxide, also known as black iron oxide, magnetic iron oxide, and black rouge, has a typical composition of about 50% by weight FeO and about 50% by weight ferric oxide, Fe₂O₃. Suitable sources of ferrosoferric oxide are pigment grade, iron ores high in ferrosoferric oxide and mill scale. The iron oxide is preferably in particulate form and preferably measures about 40 mesh (0.42mm) x D.

Any conventional source of calcium fluoride can be used in the desulphurising agent of the present invention. Preferably, fluorspar, (CaF₂) is used having a particle size of about 40 mesh (0.42mm) x D is used.

Any conventional source of silicon dioxide (SiO₂) can be used in the present invention. Suitable sources include silica sand and silica fume. It is preferred that the silicon dioxide used in the present invention should have a particle size of about 40 mesh (0.42mm) x D.

A good source is silica fume which is a co-product from the manufacture of silicon metal and ferrosilicon. Silica fume is captured as finely divided particles from a stack gas from the furnace and usually contains at least about 60% of silicon dioxide. Typically, silica fume collected from a bag filter of a silicon metal furnace contains about 90 to 98% silicon dioxide, while silica fume from a 75% ferrosilicon furnace contains about 85 to 90% silicon dioxide.

In order to make the preferred calcium aluminate slag of the present invention, appropriate amounts of calcium oxide, calcium fluoride, and aluminium oxide are mixed and heated to form a molten mass. The mass is then rapidly cooled to a solid state. The molten mass can be formed in a conventional melting unit. The liquid mass is then poured on a casting floor to form a sheet about 0.75 inches (2cm) thick. The cast sheet is allowed to cool under ambient conditions. Preferably, the slag is mixed before pouring to obtain thorough dispersion of all components in the molten mass. The poured liquid slag should solidify upon contact with the casting floor.

Finally, the calcium aluminate slag is crushed in a conventional manner to a size similar to the commercial calcium carbide and preferably to about 30 mesh (0.595mm) x D.

Any conventional source of calcium oxide, CaO, can be used. Typically, lime is used having a particle size of about 2" x 4" (5cm x 10cm).

Any conventional source of aluminium oxide can be used. Preferably bauxite is used having a particle size of about 1" (2.5cm) x D.

Any conventional source of calcium fluoride can be used. Preferably fluorspar is used having a particle size of about 1/2" (1.2cm) x D.

Preferably, the three components of the calcium aluminate slag are melted together and then rapidly solidified to form a uniform mixture of the three components. Alternatively, and less preferably, all three components are physically mixed together in a particulate form and then compacted to provide a closely associated, uniform mixture of the three. As noted above, commercial calcium carbide is forced to flow and bind around the calcium aluminate slag and metal oxide during the compacting process. All three components of the calcium aluminate slag can be mixed in particulate form with the commercial calcium carbide and preferably the metal oxide. The commercial calcium carbide will flow around and bind all particulate components to make a uniform, compacted product.

It should be noted that the weight percents of the various components of the calcium aluminate slag are based on the total weight of calcium aluminate slag, not the final desulphurisation agent.

It will be understood that the calcium oxide present in the desulphurisation agent of the present invention comes from both the commercial calcium carbide and the calcium aluminate slag. This calcium oxide is present in the desulphurisation agent of the present invention using calcium aluminate slag as a flux agent as calcium oxide and calcium hydroxide and typically is present in an amount between about 15 to 50% by weight based on the weight of the desulphurisation agent. This calcium oxide is present in the desulphurisation agent of the present invention employing silicon dioxide as a flux agent, as calcium oxide and calcium hydroxide and typically is present in an amount between about 10 to 25% by weight based on the weight of the desulphurisation agent.

The melt of iron is desulphurised in a conventional manner using the desulphurisation agent of the present invention. Good results have been obtained in both continuous and batch operations by addition of the desulphurisation agent to a stream of molten iron as it is poured into the mixing ladle.

The desulphurisation agent of the present invention may be added to the molten iron in an amount between about 0.2% to about 2.0% by weight molten iron. In fact, it has been found that the desulphurisation agent of the present invention can be substituted on a 1:1 weight basis in commercial operations for conventional commercial calcium carbide. This provides a reduction in the amount of commercial calcium carbide used to desulphurise the iron melt.

The invention may be carried into practice in various ways and will now be illustrated with reference to the following non-limiting examples.

### EXAMPLE 1

This example compares commercial calcium carbide to the present invention.

Table 1 below lists the results. It can be seen that the desulphurisation agent of the present invention produced a slag lower in calcium carbide than the slag produced from a desulphurisation step with commercial calcium carbide.

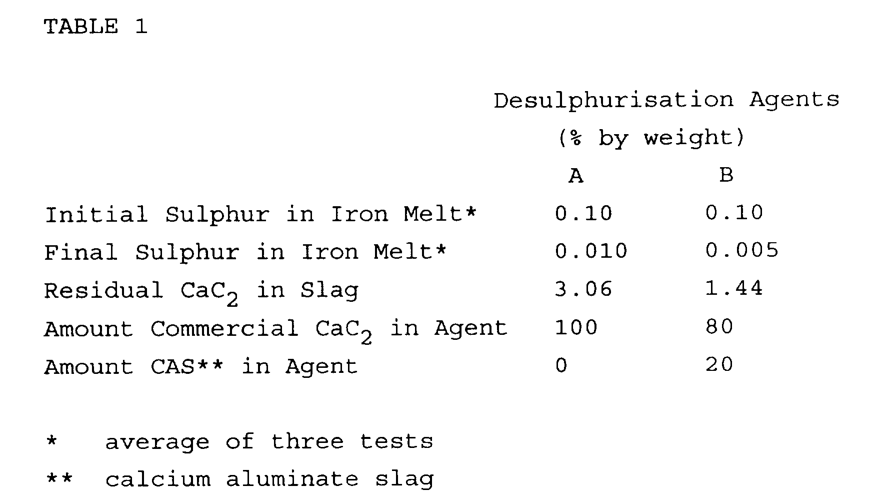

The calcium aluminate slag was made by forming a molten mass of a commercial grade of lime with a commercial grade of fluorspar and a commercial grade of aluminium oxide and then quickly cooling the mass. The molten mass had a temperature of about 1600°C. To cool, the molten mass was poured onto a casting floor where it solidified on contact forming a solid sheet of about 0.75 inch (2.0cm) thick. This was then crushed to a particle size of 30 mesh (0.595mm) x D.

The desulphurisation agent of the present invention, B, used in this example was made by mixing a particulate calcium aluminate slag made in the manner illustrated above with a particulate commercial calcium carbide, 30 mesh x 200 mesh (0.595 x 0.074mm). The desulphurisation agent was in loose particulate form and not compacted when added to the molten iron melt.

The following procedures were used to conduct the above-identified tests. Using an induction furnace, a total of six melts of molten iron were prepared, three for testing with calcium carbide and three with the present invention. Each melt weighed 75 pounds (34kg) and had a typical chemical analysis of:

| Typical Melt Chemical Analysis % by weight | |
|---|---|
| Iron | Balance |
| Carbon | 3.6 |
| Sulphur | 0.1 |
| Manganese | 0.6 |
| Silicon | 2.0 |

To each melt, 0.75 pounds (340 grams) of desulphurisation agent was added (1% addition). The agent was added as a particulate, and argon was bubbled into the melt through a graphite tube positioned in the middle of the melt. The purpose of the gas was to provide mixing within the furnace crucible. The temperature of the molten iron was 1475°C. The melt was treated for about 8 minutes, and then the slag was skimmed off the top of the melt. Samples of the molten iron were taken for sulphur analysis before treatment with the desulphurisation agent, and after treatment with the desulphurisation agent at 2 minute intervals, measured from the time of addition of the desulphurisation agent. A conventional combustion technique was used to determine the sulphur content of the molten iron.

Residual calcium carbide in the slag was determined by placing a 2 to 3 g sample of slag in a beaker of water. The water totally covered the slag. The initial weight of water plus slag was taken. The beaker was then allowed to stand under ambient conditions for a period of 15 minutes and reweighed. The difference in weight is presumed to be due to evolution of acetylene gas. From this presumption, the amount of calcium carbide in the slag is calculated.

### EXAMPLE 2

This example compares calcium carbide as a desulphurisation agent to the present invention. The results of these tests are shown in Table 2 below.

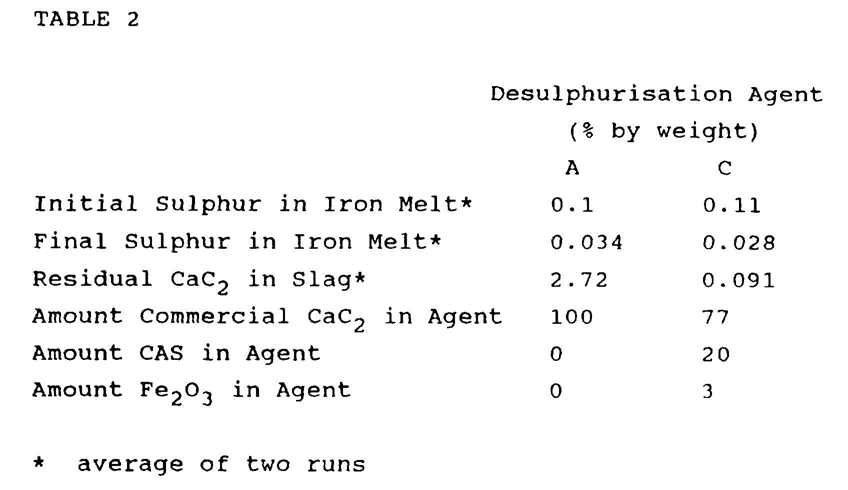

These tests were conducted in a manner similar to Example 1 above, except nitrogen gas was used instead of argon.

A reagent grade of ferric oxide was used. The test for the residual calcium carbide in the slag was conducted in the same manner as Example 1 above.

The desulphurisation agent of the present invention used in this example was made in a manner as outlined in Example 1 above except a reagent grade of particulate ferric oxide was mixed with the calcium carbide and the calcium aluminate slag, and the loose particles are compacted. Agent A was in loose particulate form.

### EXAMPLE 3

This example illustrates different formulations of the desulphurisation agent of the present invention.

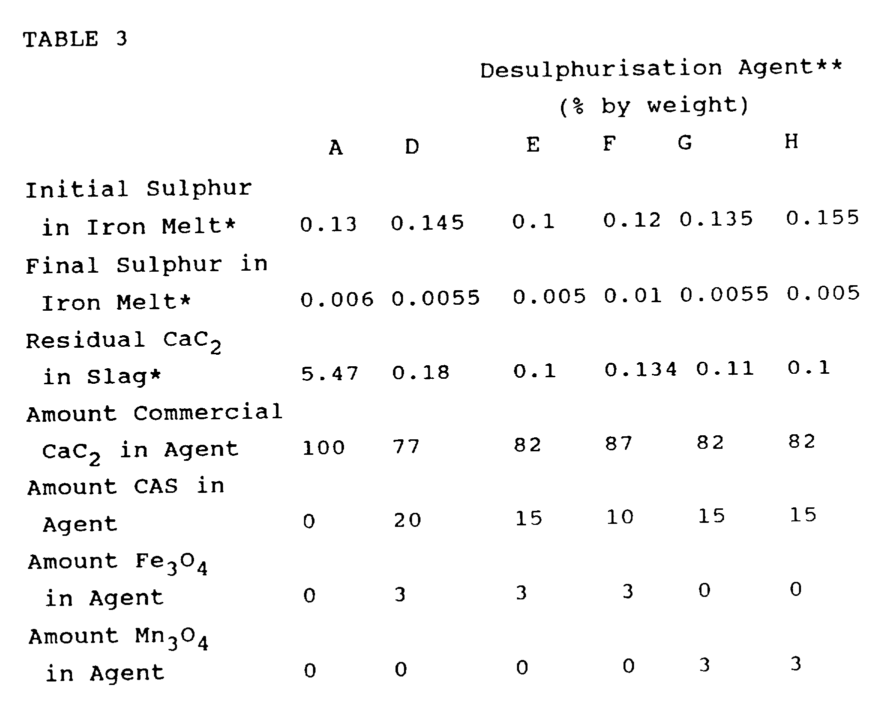

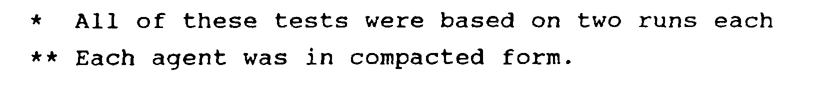

The ferrosoferric oxide, Fe₃O₄, was pigment grade obtained from Shance Chemical Corp. Desulphurisation agent G was made with reagent grade Mn₃O₄ while H was made with pigment grade manganomanganic oxide obtained from Elken Metals Company under the name M34.

The amount of residual calcium carbide in the slag was determined in this example by weighing out a 15 g sample of the slag, crushing the sample to pass through a 10 mesh screen and placing that sample in a closed 8 cu. ft. (0.23m³) vessel along with a jar containing 200 ml of 10% hydrochloric acid solution. The vessel was sealed and slag was immersed in acidic solution. Any acetylene generated by the reaction of water and calcium carbide is contained within the vessel. A sample of the acetylene/air mixture was drawn from the vessel at 5 minute intervals over a period of one hour. The percentage acetylene in the air was then measured using conventional gas chromatographic techniques with a Foxboro gas chromatograph. The percent calcium carbide was calculated from the percent of acetylene in the air.

It has been found that this test provides a very accurate method for determining the actual amount of residual calcium carbide in the slag.

### EXAMPLE 4

This example illustrates use of desulphurisation agent of the present invention in a commercial operation.

In a conventional desulphurisation operation, loose particulate commercial calcium carbide having a size of 10 mesh x 60 mesh (2.0 x 0.25mm) was used at an addition rate of 0.75% by weight based on the weight of the iron melt. The amount of residual calcium carbide in the slag using the commercial calcium carbide was 18% by weight of slag.

The desulphurisation agent H of Example 3 above, compacted and subsequently ground to a particulate size of about 12 mesh x 30 mesh (1.68 x 0.595mm), was used to replace the commercial calcium carbide. Desulphurisation agent H was added to the melt at a rate of 0.4% by weight. The process used a continuous desulphurisation ladle with one porous plus in the bottom thereof.

The iron melt treated during desulphurisation by both commercial calcium carbide and the desulphurisation agent of the present invention had a typical analysis before desulphurisation of:

| | % by Weight |
|---|---|
| Iron | Balance |
| Carbon | 3.85 |
| Silicon | 1.95 |
| Manganese | 0.30 |
| Sulphur | 0.065 |

Typically, the sulphur content of the iron after desulphurisation with both commercial calcium carbide and the desulphurisation agent of the present invention, was about 0.008 percent by weight.

In both cases, desulphurisation with commercial calcium carbide and with the desulphurisation agent of the present invention, the residence time of the iron in the desulphurisation ladle was about six minutes.

The residual calcium carbide in the slag recovered from the melt after desulphurisation with the desulphurisation agent of the present invention was about 0.43% by weight based on slag. The percent calcium carbide in the slag for both the commercial calcium carbide and the desulphurisation agent of the present invention was determined in accordance with the method disclosed in Example 3 above.

### EXAMPLE 5

This example illustrates using the desulphurisation agent of the present invention compared to the process taught in US Patent No. 4, 753,676 issued June 28, 1988 in a commercial operation.

The ′676 patent as mentioned above teaches using a mixture of commercial calcium carbide and diamide of lime, 85% by weight calcium carbonate, CaCO₂, and 11% by weight carbon, to desulphurise an iron melt.

Both desulphurisation agents, that of the ′676 patent and that of the present invention, were added to the iron melt at 0.5% by weight based on the weight of the iron melt. The residence time of the iron in the desulphurisation ladle was between about 6 to 8 minutes.

The desulphurisation ladle was similar to the desulphurisation ladle used in Example 4 except it contained three porous plugs.

The iron melt had a typical composition analysis similar to the iron melt of Example 4 except it contained three porous plugs.

The iron melt had a typical composition analysis similar to the iron melt of Example 4 except the silicon content was lower, about 1.5% by weight, and the sulphur content was higher, about 0.7% by weight.

Compacted desulphurisation agent H of Example 3 was used having a particulate size of 12 mesh x 30 mesh (1.68 x 0.595mm).

The commercial calcium carbide-diamide lime composition typically produced an iron with 0.01% by weight sulphur and typically a slag of 0.4% by weight residual calcium carbide.

The desulphurisation agent of the present invention typically produced an iron melt with 0.01% by weight sulphur and typically a slag of 0.3% by weight residual calcium carbide. The amount of residual calcium carbide for both the calcium carbide-diamide lime and the desulphurisation agent of the present invention was determined by the method disclosed in Example 4.

### EXAMPLE 6

In batchwise commercial scale operation, a desulphurisation agent of the present invention (compacted, particulate desulphurisation agent H of Example 3 above) was tested against commercial calcium carbide. In this operation, typically 0.3% by weight of both desulphurisation agents was added to the ladle, and the residence time of the iron and the desulphurisation agent in the ladle was typically 6 minutes.

The iron melt typically had a chemical analysis of:

| | % by Weight Melt |
|---|---|
| Iron | Balance |
| Carbon | 3.85 |
| Silicon | 1.3 |
| Manganese | 0.25 |
| Sulphur | 0.11 |

Using both the commercial calcium carbide and the desulphurisation agent of the present invention, the treated iron melt typically had a sulphur content of about 0.01% by weight.

The residual calcium carbide in the slag obtained from the desulphurisation process using commercial calcium carbide averaged 0.88% by weight slag while the residual calcium carbide in the slag obtained from the desulphurisation process using the desulphurisation agent of the present invention averaged about 0.086% by weight.

### EXAMPLE 7

This example compares commercial calcium carbide to the present invention.

Table 4 below lists the results. It can be seen, when compared to commercial calcium carbide alone, that the desulphurisation agent of the present invention produced a slag lower in residual calcium carbide.

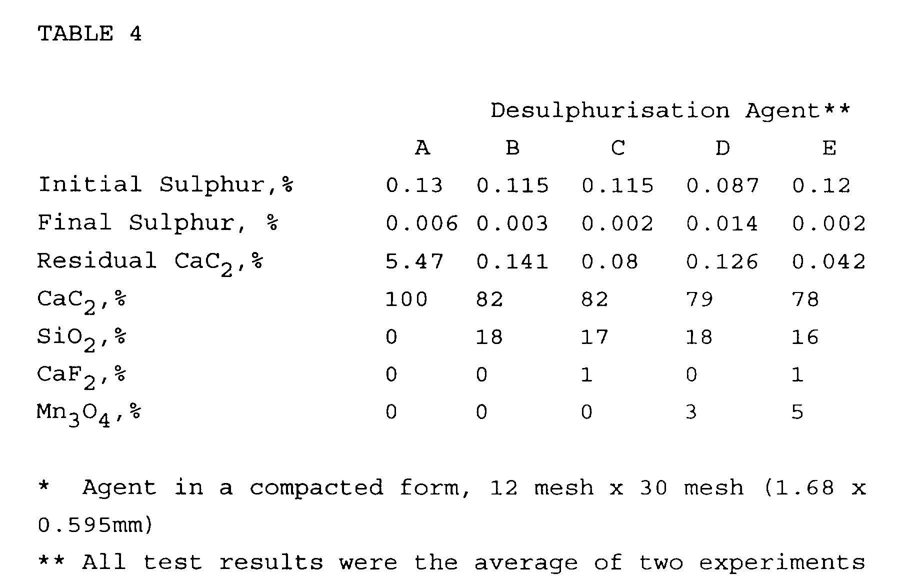

The desulphurisation agents of the present invention, B-E, used in this example were made by mixing and compacting the particulate components. The compacted components were crushed and sized to a compacted particulate form, 12 mesh x 30 mesh (1.68 x 0.595mm). Desulphurisation agents E and D were made with pigment grade manganomanganic oxide obtained from Elken Metals Company under the name M34. The silicon dioxide employed in desulphurisation agents B-E was conventional silica sand. The calcium fluoride employed in desulphurisation agents C and E was ceramic grade fluorspar. The calcium carbide was a commercial grade of calcium carbide.

The following procedures were used to conduct the above-identified tests. Using an induction furnace, a total of ten melts of molten iron were prepared, two for testing with calcium carbide and two with each of the desulphurisation agents of the present invention. Each melt weighed 75 pounds (34kg) and had a typical chemical analysis of:

| Typical Melt Chemical Analysis % by Weight | |
|---|---|
| Iron | Balance |
| Carbon | 3.6 |
| Sulphur | 0.1 |
| Manganese | 0.6 |
| Silicon | 2.0 |

To each melt, 0.75 pounds (340 grams) of desulphurisation agent was added (1% addition). The agent was added as a particulate, and nitrogen was bubbled into the melt through a graphite tube positioned in the middle of the melt. The purpose of the gas was to provide mixing within the furnace crucible. The temperature of the molten iron was 1475°C. The melt was treated for about 8 minutes, and then the slag was skimmed off the top of the melt. Samples of the molten iron were taken for sulphur analysis before treatment with the desulphurisation agent, and after treatment with the desulphurisation agent at 2 minute intervals, measured from the point of addition of the desulphurisation agent. A conventional combustion technique was used to determine the sulphur content of the molten iron.

The amount of residual calcium carbide in the slag was determined in this example by weighing out a 15 g sample of the slag, crushing the sample to pass through a 10 mesh screen and placing that sample in a closed 8 cu. ft. (0.23m³) vessel along with a jar containing 200 ml of 10% hydrochloric acid solution. The vessel was sealed and slag was immersed in acidic solution. Any acetylene generated by the reaction of water and calcium carbide is contained within the vessel. A sample of the acetylene/air mixture was drawn from the vessel at 5 minute intervals for a period of one hour. The percentage acetylene in the air was then measured using conventional gas chromatographic techniques with a Foxboro gas chromatograph. The percent calcium carbide was calculated from the percent of acetylene in the air.

It has been found that this test provides a very accurate method for determining the actual amount of residual calcium carbide in the slag.

### EXAMPLE 8

This example illustrates use of the desulphurisation agent of the present invention in a commercial operation.

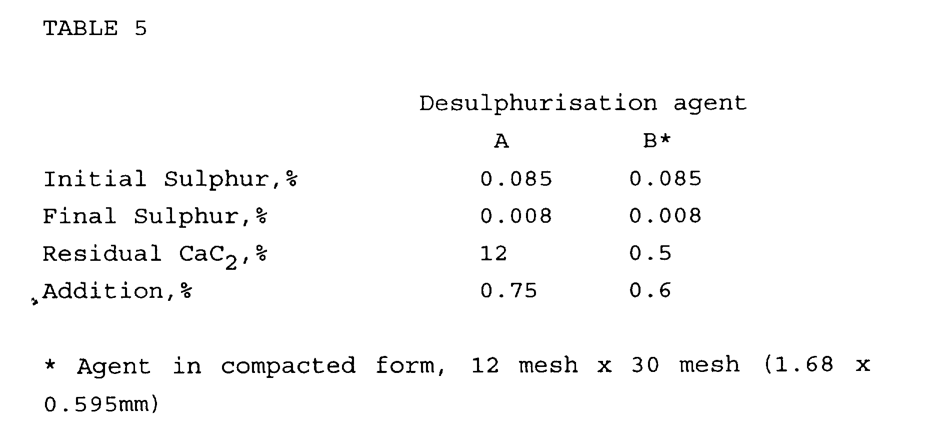

In this particular commercial foundry, loose particulate commercial calcium carbide having a size of about 10 mesh x 60 mesh (2.0 x 0.25mm) was used at an addition rate of about 0.75% by weight based on the weight of the iron melt. This process used a continuous desulphurisation ladle with one porous plug in the bottom thereof. The amount of residual calcium carbide in the slag using the commercial calcium carbide was about 12% by weight of slag.

The desulphurisation agent E of Example 7 above, compacted and subsequently crushed to a particulate size of about 12 mesh x 30 mesh (1.68 x 0.595mm), was used to replace the commercial calcium carbide. Desulphurisation agent E was added to the melt at a rate of 0.6% by weight.

The iron melt during desulphurisation by both commercial calcium carbide and the desulphurisation agent of the present invention had a typical analysis before desulphurisation of:

| | % by Weight |
|---|---|
| Iron | Balance |
| Carbon | 3.85 |
| Silicon | 1.95 |
| Manganese | 0.30 |
| Sulphur | 0.065 |

Typically, the sulphur content of the iron after desulphurisation with both commercial calcium carbide and the desulphurisation agent of the present invention was about 0.008 percent by weight.

In both cases, desulphurisation with commercial calcium carbide and with the desulphurisation agent of the present invention, the residence time of the iron in the desulphurisation ladle was about six minutes.

The residual calcium carbide in the slag recovered from the melt after desulphurisation with the desulphurisation agent of the present invention was about 0.5% by weight based on slag. The percent calcium carbide in the slag for both the commercial calcium carbide and the desulphurisation agent of the present invention was determined in accordance with the method disclosed in Example 7 above.

This example illustrates not only a reduction in the amount of commercial calcium carbide used to desulphurise the melt but also a reduction in the amount of residual calcium carbide in the slag.

### EXAMPLE 9

This example illustrates use of the desulphurisation agent of the present invention in another commercial foundry.

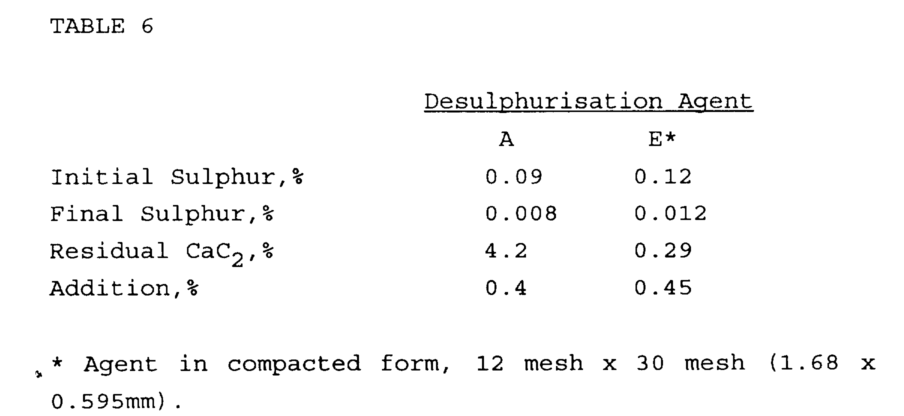

In this test, loose particulate commercial calcium carbide having a size of 10 mesh x 60 mesh was used at an addition rate of about 0.4% by weight based on the weight of the melt. This process used a continuous desulphurisation ladle with three porous plugs in the bottom thereof. The amount of residual calcium carbide in the slag using the commercial calcium carbide was about 4.2% by weight of slag.

The desulphurisation agent E of Example 7 above, compacted and subsequently crushed to a particulate size of about 12 mesh x 30 mesh (1.68 x 0.595mm), was used to replace the commercial calcium carbide. Desulphurisation agent E was added to the melt at a rate of 0.45% by weight.

The iron melt during desulphurisation by both commercial calcium carbide and the desulphurisation agent of the present invention had a typical analysis before desulphurisation of about:

| | % by Weight |
|---|---|
| Iron | Balance |
| Carbon | 3.8 |
| Silicon | 1.4 |
| Manganese | 0.30 |
| Sulphur | 0.1 |

Typically, the sulphur level in the iron after desulphurisation with commercial calcium carbide was about 0.008% by weight; the sulphur level in the iron after desulphurisation with the desulphurisation of the present invention was about 0.012% by weight.

In both cases, desulphurisation with commercial calcium carbide and with the desulphurisation agent of the present invention, the residence time of the iron in the desulphurisation ladle was about six minutes.

The residual calcium carbide in the slag recovered from the melt after desulphurisation with the desulphurisation agent of the present invention was about 0.29% by weight based on slag. The percent calcium carbide in the slag for both the commercial calcium carbide and the desulphurisation agent of the present invention was determined in accordance with the method disclosed in Example 7 above.

## Claims

1. A desulphurisation agent for an iron melt including commercial calcium carbide, characterised in that it also includes a flux agent comprising silicon dioxide and/or calcium aluminate slag, in a uniform physical mixture with the calcium carbide.

2. A desulphurisation agent as claimed in Claim 1, characterised in that the uniform mixture includes from about 60 to about 95% calcium carbide.

3. A desulphurisation agent as claimed in Claim 1 or Claim 2, characterised in that it comprises a uniform mixture of commercial calcium carbide and about 5 to about 25% by weight silicon dioxide.

4. A desulphurisation agent as claimed in any preceding Claim, characterised in that the uniform mixture further comprises about 0.1 to about 5% by weight calcium fluoride.

5. A desulphurisation agent as claimed in any preceding Claim, characterised in that the uniform mixture further comprises about 0.5 to about 10% by weight of an iron oxide and/or a manganese oxide, for example, ferric oxide, manganomanganic oxide, manganic oxide and/or ferrosoferric oxide.

6. A desulphurisation agent as claimed in Claim 1 or Claim 2, characterised in that it comprises a uniform mixture of commercial calcium carbide and about 5 to about 30% by weight calcium aluminate slag, the calcium aluminate slag comprising calcium oxide, aluminium oxide and calcium fluoride.

7. A desulphurisation agent as claimed in Claim 6, characterised in that it comprises about 70 to 95% by weight commercial calcium carbide; about 5 to about 30% by weight calcium aluminate slag; and up to about 10% by weight of iron oxide and/or manganese oxide.

8. A desulphurisation agent as claimed in Claim 7, characterised in that it comprises about 75 to about 90% by weight commercial calcium carbide; about 10 to about 20% by weight of the calcium aluminate slag; and about 1 to about 6% by weight of the metal oxide.

9. A desulphurisation agent as claimed in any of Claims 6 to 8, characterised in that the calcium aluminate slag comprises about 65 to about 50% by weight calcium oxide; about 3 to about 12% by weight calcium fluoride; and about 35 to about 25% by weight aluminium oxide.

10. A method for making a desulphurisation agent for molten iron comprising the steps of: forming a molten composition of a calcium oxide, a calcium fluoride and an aluminium oxide; rapidly cooling the molten composition to a solid composition; and combining the solid composition with a commercial calcium carbide to form a physical mixture constituting the desulphurising agent.

11. A method for making a desulphurisation agent for an iron melt comprising the steps of: forming a physical mixture of particulate commercial calcium carbide and particulate silicon dioxide; compacting the mixture; and granulating the compacted mixture to form a particulate uniform physical mixture of commercial calcium carbide and silicon dioxide.

## Patentansprüche

1. Entschwefelungsmittel, das technisches Calciumcarbid enthält, für eine Eisenschmelze, dadurch gekennzeichnet, daß es ein Siliciumdioxid und/oder Calciumaluminat-Schlacke aufweisendes Flußmittel enthält in einer gleichmäßigen physikalischen Mischung mit dem Calciumcarbid.

2. Entschwefelungsmittel nach Anspruch 1, dadurch gekennzeichnet, daß die gleichmäßige physikalische Mischung etwa 60 bis etwa 95 Gew.% Calciumcarbid enthält.

3. Entschwefelungsmittel nach Anspruch 1 oder 2, dadurch gekennzeichnet, daß es eine gleichmäßige Mischung von technischem Calciumcarbid und etwa 5 bis etwa 25 Gew. % Siliciumdioxid enthält.

4. Entschwefelungsmittel nach einem der Ansprüche 1 bis 3, dadurch gekennzeichnet, daß die gleichmäßige Mischung außerdem etwa 0,1 bis etwa 5 Gew. % Calciumfluorid enthält.

5. Entschwefelungsmittel nach einem der Ansprüche 1 bis 4, dadurch gekennzeichnet, daß die gleichmäßige Mischung außerdem etwa 0,5 bis etwa 10 Gew.% eines Eisenoxids und/oder eines Manganoxids enthält, beispielsweise Eisen(III)-oxid, Mangan(II,III)-oxid, Mangan(III)-oxid und/oder Eisen(II,III)-oxid.

6. Entschwefelungsmittel nach Anspruch 1 oder 2, dadurch gekennzeichnet, daß es eine gleichmäßige Mischung von technischem Calciumcarbid und etwa 5 bis etwa 30 Gew.% Calciumaluminat-Schlacke enthält, wobei die Calciumaluminat-Schlacke Calciumoxid, Aluminiumoxid und Calciumfluorid enthält.

7. Entschwefelungsmittel nach Anspruch 6, dadurch gekennzeichnet, daß es etwa 70 bis 95 Gew.% technisches Calciumcarbid, etwa 5 bis etwa 30 Gew.% Calciumaluminat-Schlacke und bis zu etwa 10 Gew.% an Eisenoxid und/oder Manganoxid enthält.

8. Entschwefelungsmittel nach Anspruch 7, dadurch gekennzeichnet, daß es etwa 75 bis etwa 90 Gew.% technisches Calciumcarbid, etwa 10 bis etwa 20 Gew.% Calciumaluminat-Schlacke und etwa 1 bis etwa 6 Gew.% des Metaloxids enthält.

9. Entschwefelungsmittel nach einem der Ansprüche 6 bis 8, dadurch gekennzeichnet, daß die Calciumaluminat-Schlacke etwa 65 bis etwa 50 Gew.% Calciumoxid, etwa 3 bis etwa 12 Gew.% Calciumfluorid und etwa 35 bis etwa 25 Gew.% Aluminiumoxid enthält.

10. Verfahren zur Herstellung eines Entschwefelungsmittels für eine Eisenschmelze, umfassend folgende Schritte: Herstellen einer geschmolzenen Mischung von Calciumoxid, Calciumfluorid und Aluminiumoxid; rasche Abkühlung der Schmelze zur festen Zusammensetzung; und Vereinigung der festen Zusammensetzung mit technischem Calciumcarbid zur Bildung einer physikalischen, das Entschwefelungsmittel darstellenden Mischung.

11. Verfahren zur Herstellung eines Entschwefelungsmittels für eine Eisenschmelze, umfassend folgende Schritte: Herstellen einer physikalischen Mischung aus Teilchen von technischem Calciumcarbid und Teilchen von Siliciumdioxid; Kompaktieren der Mischung; und Granulieren der kompaktierten Mischung zur Bildung einer gleichmäßigen physikalischen Teilchenmischung aus Calciumcarbid und Siliciumdioxid.

## Revendications

1. Agent désulfurant pour un bain de fer en fusion comprenant du carbure de calcium du commerce, caractérisé en ce qu'il contient également un agent fondant comprenant du dioxyde de silicium et/ou du laitier d'aluminate de calcium, dans un mélange physique uniforme avec le carbure de calcium.

2. Agent désulfurant selon la revendication 1, caractérisé en ce que le mélange uniforme comprend environ 60 % à environ 95 % de carbure de calcium.

3. Agent désulfurant selon la revendication 1 ou la revendication 2, caractérisé en ce qu'il comprend un mélange uniforme de carbure de calcium du commerce avec environ 5 % à environ 25 % en poids de dioxyde de silicium.

4. Agent désulfurant selon l'une quelconque des revendications précédentes, caractérisé en ce que le mélange uniforme comprend en outre environ 0,1 % à environ 5 % en poids de fluorure de calcium.

5. Agent désulfurant selon l'une quelconque des revendications précédentes, caractérisé en ce que le mélange uniforme comprend en outre environ 0,5 % à environ 10 % en poids d'un oxyde de fer et/ou d'un oxyde de manganèse, par exemple de l'oxyde ferrique, de l'oxyde mangano-manganique, de l'oxyde manganique et/ou de l'oxyde ferrosoferrique.

6. Agent désulfurant selon la revendication 1 ou la revendication 2, caractérisé en ce qu'il comprend un mélange uniforme de carbure de calcium du commerce avec environ 5 % à environ 30 % en poids de laitier d'aluminate de calcium, le laitier d'aluminate de calcium comprenant de l'oxyde de calcium, de l'oxyde d'aluminium et du fluorure de calcium.

7. Agent désulfurant selon la revendication 6, caractérisé en ce qu'il comprend environ 70 % à 95 % en poids de carbure de calcium du commerce ; environ 5 % à environ 30 % en poids de laitier d'aluminate de calcium ; et jusqu'à environ 10 % en poids d'oxyde de fer et/ou d'oxyde de manganèse.

8. Agent désulfurant selon la revendication 7, caractérisé en ce qu'il comprend environ 75 % à environ 90 % en poids de carbure de calcium du commerce ; environ 10 % à environ 20 % en poids du laitier d'aluminate de calcium ; et environ 20 % à environ 6 % en poids de l'oxyde métallique.

9. Agent désulfurant selon l'une quelconque des revendications 6 à 8, caractérisé en ce que le laitier d'aluminate de calcium comprend environ 65 % à environ 50 % en poids d'oxyde de calcium ; environ 3 % à environ 12 % en poids de fluorure de calcium ; et environ 35 % à environ 25 % en poids d'oxyde d'aluminium.

10. Procédé de fabrication d'un agent désulfurant pour du fer en fusion, comprenant les étapes consistant à : former une composition en fusion d'un oxyde de calcium, d'un fluorure de calcium et d'un oxyde d'aluminium ; faire refroidir rapidement la composition en fusion pour obtenir une composition solide ; et combiner la composition solide avec un carbure de calcium du commerce pour former un mélange physique constituant l'agent désulfurant.

11. Procédé de fabrication d'un agent désulfurant pour un bain de fer en fusion, comprenant les étapes consistant à : former un mélange physique de carbure de calcium du commerce en particules et de dioxyde de silicium en particules ; compacter le mélange ; et broyer en petits grains le mélange compacté pour former un mélange physique uniforme en particules du carbure de calcium du commerce et du dioxyde de silicium.
